# FASCICULE DE BREVET EUROPEEN

(11) **EP 3 486 009 B1**
(45) Date de publication et mention de la délivrance du brevet: **17.01.2024**
(21) Numéro de dépôt: 17202337.6
(22) Date de dépôt: 17.11.2017
(51) Int. Cl.: C22C 38/02, C22C 38/04, C22C 38/08, B22F 10/28, B22F 3/24, C21D 1/74, C21D 3/04, C21D 3/08, C21D 1/26, C22C 33/02, C22C 38/00

(54) **PROCÉDÉ DE FRITTAGE D'UN ACIER INOXYDABLE AUSTENITIQUE**
SINTERVERFAHREN FÜR EINEN AUSTENITISCHEN EDELSTAHL
METHOD FOR SINTERING AN AUSTENITIC STAINLESS STEEL

(43) Date de publication de la demande: 22.05.2019
(73) Titulaire: The Swatch Group Research and Development Ltd, 2074 Marin (CH)
(72) Inventeur: Porret, Joël, 2074 Marin-Epagnier (CH); Rodriguez, Pablo, 2074 Marin-Epagnier (CH)
(74) Mandataire: ICB SA

(56) Documents cités:
- JP-A- S6 184 302
- JP-A- H05 222 482
- JP-A- S56 102 501
- JP-A- S60 218 461
- JP-A- 2010 222 662
- JP-B2- 3 709 569

## Description

### Objet de l'invention

La présente invention se rapporte à un procédé de frittage d'un acier inoxydable austénitique comprenant une concentration significative en azote (≥ 0.1% en poids). La présente invention se rapporte également au produit issu du procédé qui a pour caractéristique de présenter en surface une couche très dense.

### Arrière-plan technologique

Le frittage de poudres en acier inoxydable austénitique est aujourd'hui très répandu. Il peut être notamment réalisé sur des pièces obtenues par injection (Metal Injection Molding), extrusion, pressage ou encore fabrication additive. De façon la plus traditionnelle, le frittage des aciers inoxydables austénitiques consiste à consolider et densifier la poudre dans un four à haute température (1000-1400°C), sous vide ou sous protection gazeuse. Les propriétés des pièces après frittage (densité, propriétés mécaniques et magnétiques, résistance à la corrosion, etc.), pour une composition donnée, dépendent fortement du cycle de frittage utilisé. Les paramètres suivants sont particulièrement importants : vitesse de chauffe, température et temps de frittage, atmosphère de frittage (gaz, flux de gaz, pression) et vitesse de refroidissement.

Après frittage des aciers inoxydables austénitiques, il subsiste généralement de la porosité résiduelle. Cette dernière lorsqu'elle reste limitée (< 5%) n'a que peu d'influence sur les propriétés mécaniques, thermiques ou encore magnétiques. Néanmoins, cette faible porosité résiduelle est néfaste au niveau esthétique, particulièrement lorsque les pièces sont polies. Elles présentent ainsi un aspect laiteux, un éclat plus faible et une couleur différente par rapport à des pièces totalement denses. Pour les domaines où l'esthétique est importante, il est donc nécessaire de trouver des solutions pour limiter voire éliminer cette porosité résiduelle, du moins en surface des pièces.

Pour améliorer la densité des pièces frittées, plusieurs méthodes de frittage en phase liquide peuvent, par exemple, être utilisées :
- Frittage en ajoutant un ou plusieurs éléments formant une phase liquide à la température de frittage : la phase liquide fournit ainsi un chemin de diffusion beaucoup plus rapide que dans le solide et engendre donc une meilleure densification. Dans les aciers inoxydables austénitiques, une petite quantité de bore peut par exemple être ajoutée. Toutefois, après un tel frittage avec une phase liquide, la microstructure et la composition de l'alliage ne sont pas homogènes, ce qui engendre des problèmes de résistance à la corrosion mais également de polissage.
- Frittage en phase liquide supersolidus (supersolidus liquid phase sintering, SLPS) : il s'agit de réaliser le frittage à une température entre le solidus et le liquidus de l'alliage, de façon à avoir une fraction de l'alliage en phase liquide. Toutefois, pour les aciers inoxydables, cette technique présente peu d'intérêt car la fenêtre de température entre le solidus et le liquidus est trop étroite pour maîtriser le processus. De plus, ce type de frittage engendre une forte croissance granulaire, ce qui est à nouveau néfaste pour le polissage.

En résumé, les différentes méthodes de frittage en phase liquide ne sont pas adéquates lorsque l'aptitude au polissage et la résistance à la corrosion sont primordiales, comme dans les domaines de l'horlogerie et de la joaillerie par exemple.

Comme alternative, pour des pièces frittées en phase solide qui présentent une porosité fermée, c.à.d. une densité supérieure à 90% après frittage, il est possible d'effectuer un traitement de compression isostatique à chaud (High Isostatic Pressing, HIP) pour éliminer toute porosité résiduelle. Cette solution fonctionne bien mais cette technologie est très coûteuse. De plus, les pièces en acier inoxydable austénitique qui ont subi un traitement de compression isostatique à chaud sont oxydées après traitement ce qui implique en général de devoir usiner ou polir toutes les surfaces des pièces après traitement.

Du document JP 3709569, on connaît un procédé de fabrication d'un corps fritté avec une étape de frittage avec une vitesse de chauffage comprise entre 1.5 et 15 °C/min de manière à obtenir un corps fritté avec une couche de 50 µm en surface ayant une porosité inférieure ou égale à 2%. L'acier inoxydable austénitique a en poids une teneur en C de 0.022%, de Si de 0.7%, de Mn de 0.36%, de P de 0.025%, de S de 0.003%, de Ni de 12.96%, de Cr de 16.86%, de Mo de 2.09%, de N de 0.084% et d'O de 0.57%.

Du document JP S56102501, on connaît un procédé de fabrication d'une partie frittée en acier inoxydable austénitique avec une étape de compression à froid de la poudre, suivie d'un frittage et d'une seconde compression pour augmenter la densité en surface. La poudre a en poids une teneur en C inférieure ou égale à 0.04%, une teneur en Cr comprise entre 12 et 25%, une teneur en Ni comprise entre 4 et 20% et une teneur en Mo inférieure ou égale à 4%.

### Résumé de l'invention

La présente invention a pour objet principal de proposer un nouveau procédé de frittage en phase solide permettant d'obtenir des densités très élevées en surface des pièces sans devoir recourir à une densification sous haute pression (HIP). Le procédé est spécifiquement adapté pour fabriquer des aciers inoxydables austénitiques à haute teneur en azote permettant le cas échéant de réduire voire s'affranchir de l'utilisation du nickel connu pour son caractère allergène.

La présente invention est définie par les revendications indépendantes. Des réalisations avantageuses sont décrites dans les revendications dépendantes.

A cet effet, la présente invention propose un procédé se déclinant en trois étapes avec une première étape conventionnelle consistant à fritter la poudre dans le domaine austénitique. Dans une seconde étape, l'alliage issu de la première étape est traité dans le domaine ferritique ou dans le domaine biphasé ferrite + austénite pour former en surface une couche comprenant de la ferrite. Cette dernière, grâce à sa structure cristallographique moins compacte que celle de l'austénite, permet une diffusion plus rapide des éléments d'alliage et, par là-même, une meilleure densification. Dans une troisième étape, l'alliage est traité dans le domaine austénitique pour éliminer la ferrite préalablement formée en surface.

La seconde étape est réalisée en jouant sur la température et/ou en contrôlant l'atmosphère pour dénitrurer et/ou décarburer la surface. Inversement, dans la troisième étape, la surface est carburée et/ou nitrurée pour favoriser la formation d'austénite.

Avantageusement, le temps de maintien total pour les secondes et troisième étapes est maintenu en dessous de 20 heures pour gagner en productivité et éviter une croissance excessive du grain austénitique néfaste au polissage.

Le procédé selon l'invention permet ainsi d'obtenir des pièces en acier inoxydable austénitique totalement denses en surface sans présence de ferrite résiduelle, avec une taille de grain limitée et, ce, avec des temps de cycle raisonnables. Après polissage, l'éclat et la couleur de ces pièces sont comparables à ceux de pièces obtenues par métallurgie conventionnelle (coulée + traitements thermomécaniques) ou ayant subi un traitement de densification par compression isostatique à chaud (HIP).

D'autres avantages ressortiront des caractéristiques exprimées dans les revendications, de la description détaillée de l'invention illustrée ci-après à l'aide des dessins annexés donnés à titre d'exemples nullement limitatifs.

### Brève description des figures

Les figures 1A et 1B illustrent à l'aide d'un diagramme de phases pour une composition d'acier inoxydable les changements de phases induits par les trois étapes du procédé de frittage selon l'invention avec respectivement à la figure 1A les changements de phases en surface de la pièce et à la figure 1B les changements de phases au coeur de la pièce.
La figure 2 représente schématiquement une partie de la pièce issue du procédé selon l'invention comportant en surface une couche de densité supérieure à celle du coeur.
Les figures 3 et 4 représentent une micrographie en coupe d'un échantillon réalisé avec le procédé de l'invention. Plus précisément, la figure 3 représente un agrandissement à la jonction entre la couche dense de surface et le coeur poreux et la figure 4 représente une vue en coupe de l'ensemble de l'échantillon.
La figure 5 représente une vue en coupe similaire à celle de la figure 3 pour un échantillon réalisé selon le procédé de l'invention avec des paramètres adaptés pour augmenter l'épaisseur de la couche dense.

### Description détaillée de l'invention

La présente invention se rapporte à un nouveau procédé de frittage d'un acier inoxydable austénitique. Elle se rapporte également à la pièce issue du procédé qui peut notamment être une pièce d'habillage d'une montre ou une pièce de bijouterie.

Le procédé est d'application pour tous les alliages inoxydables austénitiques comprenant une concentration significative en azote ou en azote et en carbone et pour lesquels il est possible de former de la ferrite lors du frittage. On entend par concentration significative une concentration supérieure ou égale à 0.1% en poids d'azote, avec éventuellement une concentration en carbone également supérieure ou égale à 0.1% en poids. Cette concentration en N ou en N+C peut être présente dans la poudre initiale ou résulter de l'enrichissement en N et en C de l'alliage lors du frittage sous une atmosphère contrôlée. La poudre initiale n'est dès lors pas nécessairement une poudre 100% austénitique mais peut comporter de la ferrite.

Parmi les alliages les plus communs, cela concerne notamment les nuances 316LN (1.4406, 1.4429) et 317LN (1.4434), mais aussi les nuances 1.4466, 1.4537, 1.4547, 1.4652, 1.4659, 1.4529 et 1.4565. Selon l'invention, tous les aciers inoxydables austénitiques dont le nickel est compensé complètement (Ni ≤ 0.5%) ou partiellement par de l'azote ou par de l'azote et du carbone peuvent être frittés, comme par exemple les nuances 1.3816, 1.3815, 1.4456, 1.4452 ou 1.3808 (UNS S29225). A ces alliages s'ajoutent tous les aciers inoxydables pour lesquels serait ajouté de l'azote ou de l'azote et du carbone dans la poudre, avant ou pendant le frittage.

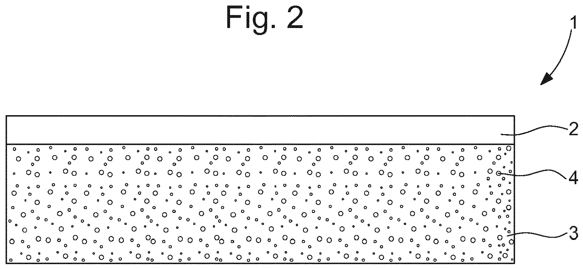

Le procédé selon l'invention permet de former une pièce en acier inoxydable sans ferrite résiduelle présentant en surface une couche de densité supérieure à celle du coeur de la pièce. Cette couche a, de préférence, une épaisseur supérieure ou égale à 20 µm, plus préférentiellement supérieure ou égale à 30 µm et, encore plus préférentiellement, supérieure ou égale à 50 µm. Qualitativement, cette différence de densité entre la couche de surface et le coeur peut être aisément visualisée par microscopie optique sur une coupe de l'échantillon où une transition nette entre la couche très dense et le coeur poreux est observée. Schématiquement, cette transition sur une coupe de la pièce 1 est représentée à la figure 2 où on voit le coeur 3 comportant des pores 4, surmonté d'une couche 2 dépourvue ou quasiment dépourvue de pores. Quantitativement, le volume poreux du coeur et de la surface peut être déterminé par analyse d'images en microscopie optique de sections polies de l'échantillon. De préférence, la surface a une densité relative comprise entre 99% et 100% (≥ 99%). Le coeur poreux a quant à lui une densité relative supérieure à 90% et inférieure à 99% (< 99%). Par ailleurs, l'absence de ferrite au coeur et en surface de la pièce peut être confirmée par microscopie optique, diffraction des rayons X ou encore des techniques de mesures des propriétés magnétiques.

Le procédé de frittage selon l'invention comporte les étapes suivantes réalisées sous atmosphère contrôlée dans une gamme de températures comprises entre 900 et 1400°C sélectionnées en fonction de la composition de l'acier :
1) Une première étape de frittage de la poudre dans le domaine 100% austénitique sous une atmosphère comprenant un gaz porteur en azote (N₂ par exemple). La poudre a typiquement un diamètre D90 compris entre 5 et 100 µm. Durant cette étape, la concentration en azote dans l'alliage est fixée tout en densifiant les pièces jusqu'à élimination de la porosité ouverte (densité > 90%). La concentration en azote, pour un alliage donné, dépend de la température et de la pression partielle du gaz porteur d'azote (≥ 0.1 bar). La concentration en carbone dans l'alliage dépend de la concentration initiale en carbone dans la poudre, des éventuels résidus provenant de liants organiques utilisés pour la mise en forme de la poudre et des réactions entre le carbone et l'atmosphère pendant le frittage (réduction du carbone par l'oxygène, décarburation, etc.). Ainsi, d'autres gaz peuvent être utilisés en complément du gaz porteur d'azote pour la réduction des oxydes (par exemple H₂), pour ajuster la concentration en carbone (par exemple CO, CH₄) ou pour ajuster la pression totale (par exemple Ar). En général, cette seule étape de frittage dans le domaine austénitique est utilisée dans l'art antérieur pour fritter les aciers inoxydables austénitiques.
2) Une deuxième étape ayant pour but de densifier les pièces du moins en surface en formant de la ferrite à partir de la surface. En effet, la diffusion des éléments d'alliages dans la structure cubique centrée de la ferrite étant environ deux ordres de grandeur supérieures à la diffusion des éléments dans la structure cubique face centrée de l'austénite, la densification est beaucoup plus importante en présence de ferrite. Pour former de la ferrite en surface des pièces, plusieurs solutions sont possibles :
   A. Fixer la température de façon à ce que l'alliage présente une structure biphasée ferrite+austénite ou complétement ferritique. En surface, l'azote et le carbone, qui stabilisent la phase austénitique, peuvent être relargués dans l'atmosphère par diffusion dans le solide et la formation de ferrite est facilitée, la solubilité du carbone et de l'azote étant beaucoup plus faible dans la ferrite. A coeur, où la concentration en azote et en carbone n'a pas été réduite par diffusion à travers la surface, la composition de l'alliage reste inchangée car la porosité a été fermée lors de la première étape. De préférence, la température sera fixée de façon à avoir une structure biphasée ferrite+austénite ou complètement ferritique en surface et une structure totalement austénitique à coeur, mais il est possible, en fonction de l'alliage et des paramètres utilisés lors de ces deux premières étapes de frittage, qu'un peu de ferrite se forme également à coeur lors de cette étape.
   B. Fixer la pression partielle du gaz porteur d'azote, voire opérer sous une atmosphère dépourvue d'azote, de façon à réduire la quantité d'azote en surface des pièces par dénitruration et ainsi former une structure austénite + ferrite ou complètement ferritique en surface. A coeur, où la concentration en azote n'a pas été réduite par diffusion à travers la surface, la composition de l'alliage reste inchangée et la structure demeure totalement austénitique.
   C. Fixer la pression partielle du gaz porteur de carbone qui est par exemple du CO ou du CH₄ de façon à réduire la quantité de carbone en surface des pièces par décarburation ou plus simplement utiliser une atmosphère décarburante, par exemple avec de l'H₂, si l'alliage contient déjà du carbone. A nouveau, l'atmosphère doit alors être sélectionnée pour que l'alliage présente une structure biphasée austénite+ferrite ou complètement ferritique à l'équilibre. A coeur, où la concentration en carbone n'a pas été réduite par diffusion à travers la surface, la composition de l'alliage reste inchangée et la structure demeure totalement austénitique.
   D. Utiliser n'importe quelle combinaison des solutions A, B et C.

En résumé, lors de ce palier, le but est de former de la ferrite en surface des pièces de façon à obtenir une couche très dense. Comme cette ferrite se forme notamment par dénitruration et/ou décarburation, qui sont des phénomènes de diffusion dans le solide, l'épaisseur de cette couche densifiée contenant de la ferrite, pour une composition donnée, dépend de la température, de la durée du palier et des pressions partielles des gaz porteurs d'azote et/ou de carbone. A coeur, où la concentration en azote et en carbone n'a pas été réduite par diffusion à travers la surface, la composition et donc la structure reste inchangée car la porosité a été fermée lors de la première étape. Toutefois, si la température est différente entre la première et la deuxième étapes, il est possible qu'un peu de ferrite se forme également à coeur bien que la composition reste inchangée.
3) Une troisième étape pour éliminer la ferrite formée en surface. L'élimination de la ferrite en surface se fait notamment en renitrurant et/ou en recarburant les pièces en sélectionnant de façon adéquate la température, la pression partielle du gaz porteur d'azote (≥ 0.1 bar) et l'éventuelle pression partielle du gaz porteur de carbone. Ces paramètres doivent être fixés de façon à ce que l'alliage présente une structure totalement austénitique à l'équilibre. Comme la nitruration et la carburation sont des phénomènes de diffusion, l'épaisseur de la couche de diffusion dépend du temps et de la température pour un alliage et une atmosphère donnés. Les paramètres de cette étape sont donc dépendants de l'étape précédente et doivent être fixés de façon à transformer toute la ferrite en austénite. En effet, la présence de ferrite dans les pièces n'est pas souhaitée, car cette dernière réduit la résistance à la corrosion et présente un comportement ferromagnétique. La troisième étape est de manière conventionnelle suivie par un refroidissement avec une vitesse de refroidissement adaptée en fonction de la composition pour garder une structure austénitique à température ambiante.

Idéalement, ces différentes étapes sont réalisées pendant le même cycle de frittage. Toutefois, elles peuvent également être réalisées séparément. Le principe de frittage présenté peut aussi consister en un post-traitement sur des pièces frittées différemment (frittage laser, frittage flash SPS pour *Sparts plasma sintering,* etc).

Ce procédé de frittage a été appliqué avec succès sur plusieurs poudres différentes. Il est notamment appliqué sur des pièces en acier inoxydable austénitique sans nickel mises en forme par moulage par injection de métal (*Metal Injection Molding*).

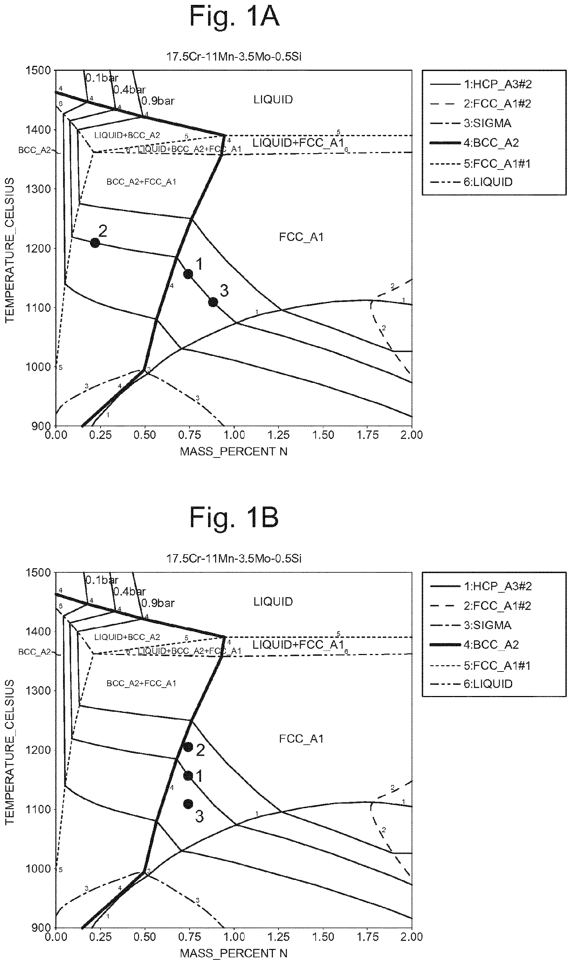

A titre d'exemple, le procédé de frittage selon l'invention en trois étapes est explicité ci-après à l'aide d'un diagramme de phases. Ce dernier pour un alliage donné permet notamment de prévoir les phases existantes en fonction de la température. Pour les aciers inoxydables austénitiques, il est également judicieux d'observer l'influence de la concentration en azote, car elle peut être ajustée lors du frittage, notamment via la température et la pression partielle en azote. Un tel diagramme de phase pour l'acier inoxydable Fe-17.5Cr-11Mn-3.5Mo-xN est présenté à la figure 1A. La zone qui correspond à un alliage 100% austénitique est nommée FCC_A1. La ferrite correspond à la phase BCC_A2 et apparait lorsque la concentration en azote est trop faible à une température donnée ou lorsque la température est trop élevée pour une pression partielle en azote donnée. Finalement, l'influence de la pression partielle en azote sur la concentration en azote dans l'alliage est illustrée par des courbes isobares pour des pressions partielles en azote de 100, 400 et 900 mbars. Pour cette poudre Fe-17.5Cr-11Mn-3.5Mo, la concentration en carbone est faible (<0.1%) et le frittage est réalisé dans une atmosphère contenant une pression partielle d'azote (N₂). Le procédé selon l'invention permet d'obtenir une densité très élevée en surface des pièces grâce aux étapes 1, 2 et 3 illustrées sur le diagramme de phases à l'aide de ronds pour respectivement le coeur et la surface de la pièce aux figures 1B et 1A. Dans cet exemple, la pression partielle en azote est maintenue à 400 mbars dans les trois étapes et le changement de phases en surface est opéré en modifiant la température. Les trois étapes sont les suivantes :
1) Nitruration de la poudre et densification jusqu'à élimination de la porosité ouverte dans le domaine 100% austénitique. C'est la température et la pression partielle en azote qui permettent d'ajuster la concentration en azote dans l'alliage. Le temps nécessaire à la bonne nitruration de la poudre dépend de la taille de la poudre. Néanmoins, pour des particules ayant un D90 inférieur à 100 microns et pour une température supérieure à 1000°C, la vitesse de nitruration est relativement rapide, c.à.d. inférieure à une heure. La densification jusqu'à fermeture des pores est par contre plus longue et nécessite généralement plusieurs heures. Ainsi, l'échantillon d'une épaisseur d'environ 10 mm a été maintenu à une température de 1150°C pendant 3 heures pour atteindre à l'équilibre une teneur en azote dans l'alliage de 0.75% en poids (rond 1 dans les figures 1A et 1B) tout en densifiant l'échantillon jusqu'à élimination de la porosité ouverte.
2) Augmentation de la température jusqu'à 1220°C de façon à obtenir, à l'équilibre thermodynamique, une structure biphasée ferrite+austénite, le palier étant de 1h à cette température. En surface, de l'azote est relargué dans l'atmosphère et la formation de ferrite est rapide (rond 2 à la figure 1A). Pour le coeur où la concentration en azote n'a pas diminué, la structure reste austénitique malgré l'augmentation de la température (rond 2 à la figure 1B).
3) Elimination de la ferrite présente en surface par renitruration à une plus basse température de 1100°C avec un maintien de 2h (rond 3 aux figures 1A et 1B). La température et le temps de maintien sont fixés de façon à éliminer totalement la ferrite présente en surface.

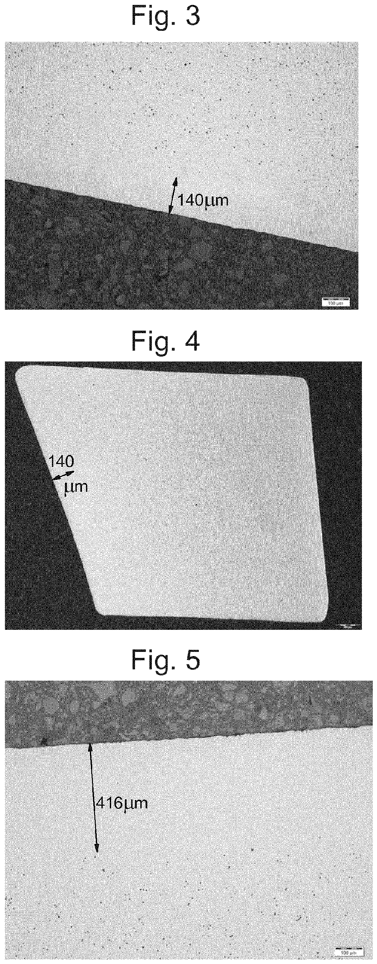

Avec ce procédé, on obtient finalement des pièces sans ferrite résiduelle et très denses en surface comme le montrent les micrographies des figures 3 et 4 avec une couche dense ayant une épaisseur de 100-150 µm. En allongeant le temps de traitement aux étapes 2) et 3) à respectivement 4 et 8 h toutes autres choses restant égales, l'épaisseur de la couche est augmentée jusqu'à 400-450 µm (figure 5).

On précisera qu'en allongeant encore les temps de maintien il serait possible aux étapes 2) et 3) respectives de former de la ferrite sur l'ensemble de la pièce et d'ensuite nitrurer ou carbonitrurer le tout pour au final former une pièce 100% austénitique présentant une densité relative supérieure ou égale à 99% sur toute son épaisseur. Cependant, pour des pièces telles que les pièces d'habillage en horlogerie ayant typiquement des épaisseurs supérieures à 1.5 millimètres, cela mènerait à des temps de cycle très longs de plus de 20 heures avec, pour corollaire, une croissance granulaire excessive très néfaste pour le polissage (effet peau d'orange). Ainsi, de préférence, la couche de surface a une épaisseur inférieure à 0.75 mm et plus préférentiellement inférieure à 0.5 mm et le grain austénitique a une taille moyenne inférieure à 300 µm, de préférence inférieure à 100 µm, et, plus préférentiellement inférieure à 50 µm.

## Revendications

1. Procédé de fabrication d'une pièce (1) en acier inoxydable austénitique présentant une différence de densité entre son coeur (3) et sa surface et ayant une teneur en azote supérieure ou égale à 0.1% en poids avec optionnellement une teneur en carbone supérieure ou égale à 0.1% en poids et ayant une teneur en nickel inférieure ou égale à 0.5% en poids, le procédé comportant les étapes suivantes réalisées sous une atmosphère contrôlée :
1) Mise à disposition d'un alliage fritté avec une structure austénitique ou mise à disposition d'une poudre et frittage de la poudre pour former ledit alliage fritté, l'alliage fritté ayant une teneur en azote supérieure ou égale à 0.1% en poids avec optionnellement une teneur en carbone supérieure ou égale à 0.1% en poids et ayant une teneur en nickel inférieure ou égale à 0.5% en poids,
2) Traitement de dénitruration et/ou décarburation de l'alliage fritté pour transformer ladite structure austénitique en une structure ferritique ou biphasée ferrite + austénite sur une couche (2) en surface de l'alliage, l'étape 2) étant réalisée en pratiquant une ou plusieurs des actions suivantes : ajuster la température, ajuster la pression partielle d'un gaz porteur en azote de l'atmosphère, ajuster la pression partielle d'un gaz porteur en carbone de l'atmosphère, pour dénitrurer et/ou décarburer la couche (2) en surface,
3) Traitement de renitruration et/ou recarburation de l'alliage fritté pour transformer la structure ferritique ou biphasée ferrite + austénite obtenue à l'étape 2) en ladite structure austénitique et former après refroidissement la pièce (1) présentant sur la couche (2) soumise aux transformations des étapes 2) et 3) une densité supérieure à celle du coeur (3) de la pièce (1), l'étape 3) étant réalisée en pratiquant une ou plusieurs des actions suivantes : ajuster la température, ajuster la pression partielle d'un gaz porteur en azote de l'atmosphère, ajuster la pression partielle d'un gaz porteur en carbone de l'atmosphère, de manière à renitrurer et/ou recarburer la couche (2) en surface.

2. Procédé selon la revendication 1, **caractérisé en ce que** le temps de maintien cumulé pour les étapes 2) et 3) est inférieur à 20 heures.

3. Procédé selon la revendication 1 ou 2, **caractérisé en ce que** la teneur en azote supérieure ou égale à 0.1 % en poids est fixée lors de l'étape 1) de frittage en contrôlant la température et la pression partielle du gaz porteur en azote de l'atmosphère.

4. Procédé selon l'une quelconque des revendications précédentes, **caractérisé en ce que** l'étape 1) de frittage de la poudre et les étapes 2) et 3) sont réalisées en continu pendant un même cycle.

5. Procédé selon l'une quelconque des revendications 1 à 3, **caractérisé en ce que** les étapes 2) et 3) sont réalisées pendant des cycles distincts.

6. Procédé selon l'une quelconque des revendications précédentes, **caractérisé en ce que** l'alliage fritté de l'étape 1) a été préalablement mis en forme par injection, extrusion, pressage ou fabrication additive.

7. Procédé selon l'une quelconque des revendications précédentes, **caractérisé en ce que** l'alliage fritté de l'étape 1) a été obtenu par frittage flash SPS ou par frittage laser.

8. Pièce (1), fabriqué selon l'une des revendications précédentes, en acier inoxydable austénitique frittée ayant une teneur en azote supérieure ou égale à 0.1% en poids et optionnellement une teneur en carbone supérieure ou égale à 0.1% en poids, **caractérisée en ce que** la pièce (1) comporte en surface une couche (2) présentant une densité supérieure à celle du coeur (3) de la pièce (1) et **en ce que** l'acier inoxydable austénitique a une teneur en nickel inférieure ou égale à 0.5% en poids.

9. Pièce (1) selon la revendication 8, **caractérisée en ce que** la couche (2) a une épaisseur minimum de 20 µm, de préférence de 30 µm et, plus préférentiellement, de 50 µm.

10. Pièce (1) selon la revendication 8 ou 9, **caractérisée en ce que** la couche (2) a une épaisseur inférieure à 0.75 mm et, de préférence, à 0.5 mm.

11. Pièce (1) l'une quelconque des revendications 8 à 10, **caractérisée en ce que** la couche (2) a une densité comprise entre 99 et 100%.

12. Pièce (1) selon l'une quelconque des revendications 8 à 11, **caractérisée en ce que** l'acier inoxydable austénitique a une teneur combinée en carbone et en azote supérieure ou égale à 0.2% en poids.

13. Pièce (1) selon l'une quelconque des revendications 8 à 12, **caractérisée en ce que** l'acier inoxydable austénitique a une taille de grain moyenne inférieure à 300 µm, de préférence à 100 µm, et plus préférentiellement à 50 µm.

14. Pièce (1) selon l'une quelconque des revendications 8 à 13, **caractérisée en ce qu'**il s'agit d'une pièce d'horlogerie ou de bijouterie.

15. Montre ou bijou comprenant la pièce (1) selon l'une quelconque des revendications 8 à 14.

## Patentansprüche

1. Verfahren zur Herstellung eines Werkstücks (1) aus austenitischem rostfreiem Stahl, das einen Dichteunterschied zwischen seinem Kern (3) und seiner Oberfläche aufweist und einen Stickstoffgehalt von größer oder gleich 0,1 Gew.-% mit optional einem Kohlenstoffgehalt von größer oder gleich 0,1 Gew.-% hat und einen Nickelgehalt von kleiner oder gleich 0,5 Gew.-% hat, wobei das Verfahren die folgenden Schritte umfasst, die in einer kontrollierten Atmosphäre durchgeführt werden:
1) Bereitstellen einer gesinterten Legierung mit einer austenitischen Struktur oder Bereitstellen eines Pulvers und Sintern des Pulvers, um die gesinterte Legierung zu bilden, wobei die gesinterte Legierung einen Stickstoffgehalt von größer oder gleich 0,1 Gew.-% mit optional einem Kohlenstoffgehalt von größer oder gleich 0,1 Gew.-% hat und einen Nickelgehalt von kleiner oder gleich 0,5 Gew.-% hat,
2) Denitrierungs- und/oder Entkohlungsbehandlung der gesinterten Legierung zur Umwandlung der austenitischen Struktur in eine ferritische oder zweiphasige Ferrit + Austenit-Struktur auf einer Oberflächenschicht (2) der Legierung, wobei Schritt 2) durch Ausführen einer oder mehrerer der folgenden Maßnahmen durchgeführt wird: Einstellen der Temperatur, Einstellen des Partialdrucks eines Stickstoffträgergases der Atmosphäre, Einstellen des Partialdrucks eines Kohlenstoffträgergases der Atmosphäre, um die Oberflächenschicht (2) zu denitrieren und/oder zu entkohlen,
3) Renitrierungs- und/oder Rekarburierungsbehandlung der gesinterten Legierung, um die in Schritt 2) erhaltene ferritische oder zweiphasige Struktur Ferrit + Austenit in die austenitische Struktur umzuwandeln und nach Abkühlung das Werkstück (1) zu bilden, das auf der den Umwandlungen der Schritte 2) und 3) unterworfenen Schicht (2) eine höhere Dichte als der Kern (3) des Werkstücks (1) aufweist, wobei der Schritt 3) durchgeführt wird, indem eine oder mehrere der folgenden Aktionen durchgeführt werden: Einstellen der Temperatur, Einstellen des Partialdrucks eines Stickstoffträgergases der Atmosphäre, Einstellen des Partialdrucks eines Kohlenstoffträgergases der Atmosphäre, um die Oberflächenschicht (2) zu renitrieren und/oder zu rekarburieren.

2. Verfahren nach Anspruch 1, **dadurch gekennzeichnet, dass** die kumulierte Haltezeit für die Schritte 2) und 3) weniger als 20 Stunden beträgt.

3. Verfahren nach Anspruch 1 oder 2, **dadurch gekennzeichnet, dass** der Stickstoffgehalt von 0,1 Gew.-% oder mehr in Schritt 1) des Sinterns durch Steuerung der Temperatur und des Partialdrucks des stickstoffhaltigen Gases der Atmosphäre festgelegt wird.

4. Verfahren nach einem der vorhergehenden Ansprüche, **dadurch gekennzeichnet, dass** der Schritt 1) des Sinterns des Pulvers und die Schritte 2) und 3) kontinuierlich während eines einzigen Zyklus durchgeführt werden.

5. Verfahren nach einem der Ansprüche 1 bis 3, **dadurch gekennzeichnet, dass** die Schritte 2) und 3) während getrennter Zyklen durchgeführt werden.

6. Verfahren nach einem der vorhergehenden Ansprüche, **dadurch gekennzeichnet, dass** die gesinterte Legierung aus Schritt 1) zuvor durch Spritzgießen, Extrudieren, Pressen oder additive Fertigung geformt wurde.

7. Verfahren nach einem der vorhergehenden Ansprüche, **dadurch gekennzeichnet, dass** die gesinterte Legierung aus Schritt 1) durch SPS-Flash-Sintern oder Lasersintern erhalten wurde.

8. Werkstück (1), hergestellt nach einem der vorhergehenden Ansprüche, aus gesintertem austenitischem rostfreiem Stahl mit einem Stickstoffgehalt von größer oder gleich 0,1 Gew.-% und optional einem Kohlenstoffgehalt von größer oder gleich 0,1 Gew.-%, **dadurch gekennzeichnet, dass** das Werkstück (1) eine Oberflächenschicht (2) aufweist, die eine höhere Dichte als der Kern (3) des Werkstücks (1) aufweist, und dass der austenitische rostfreie Stahl einen Nickelgehalt von kleiner oder gleich 0,5 Gew.-% aufweist.

9. Werkstück (1) nach Anspruch 8, **dadurch gekennzeichnet, dass** die Schicht (2) eine Mindestdicke von 20 µm, vorzugsweise von 30 µm und besonders bevorzugt von 50 µm hat.

10. Werkstück (1) nach Anspruch 8 oder 9, **dadurch gekennzeichnet, dass** die Schicht (2) eine Dicke von weniger als 0,75 mm und vorzugsweise weniger als 0,5 mm hat.

11. Werkstück (1) nach einem der Ansprüche 8 bis 10, **dadurch gekennzeichnet, dass** die Schicht (2) eine Dichte zwischen 99 und 100 % hat.

12. Werkstück (1) nach einem der Ansprüche 8 bis 11, **dadurch gekennzeichnet, dass** der austenitische rostfreie Stahl einen kombinierten Kohlenstoff- und Stickstoffgehalt von 0,2 Gew.-% oder mehr aufweist.

13. Werkstück (1) nach einem der Ansprüche 8 bis 12, **dadurch gekennzeichnet, dass** der austenitische rostfreie Stahl eine durchschnittliche Korngröße von weniger als 300 µm, vorzugsweise 100 µm und besonders bevorzugt 50 µm aufweist.

14. Werkstück (1) nach einem der Ansprüche 8 bis 13, **dadurch gekennzeichnet, dass** es sich um ein Uhrwerk oder Schmuckstück handelt.

15. Uhr oder Schmuck, der das Werkstück (1) nach einem der Ansprüche 8 bis 14 umfasst.

## Claims

1. Method for manufacturing an austenitic stainless steel workpiece (1) having a difference in density between its core (3) and its surface, and having a nitrogen content greater than or equal to 0.1% by weight with optionally a carbon content greater than or equal to 0.1% by weight and having a nickel content less than or equal to 0.5% by weight, the method comprising the following steps carried out in a controlled atmosphere:
1) Providing a sintered alloy with an austenitic structure or providing a powder and sintering the powder to form said sintered alloy, the sintered alloy having a nitrogen content greater than or equal to 0.1% by weight, optionally with a carbon content greater than or equal to 0.1% by weight and having a nickel content less than or equal to 0.5%,
2) Denitriding and/or decarburising the sintered alloy to transform said austenitic structure into a ferritic structure or ferrite + austenite two-phase structure on a surface layer (2) of the alloy, step 2) being carried out by performing one or more of the following actions: adjusting the temperature, adjusting the partial pressure of a nitrogen carrier gas of the atmosphere, adjusting the partial pressure of a carbon carrier gas of the atmosphere, to denitrify and/or decarburise the surface layer (2),
3) Denitriding and/or decarburising the sintered alloy to transform the ferritic or ferrite + austenite two-phase structure obtained in step 2) into said austenitic structure and, after cooling, forming the workpiece (1) which, on the layer (2) subjected to the transformations in steps 2) and 3), has a density higher than that of the core (3) of the workpiece (1), step 3) being carried out by performing one or more of the following actions: adjusting the temperature, adjusting the partial pressure of a nitrogen carrier gas of the atmosphere, adjusting the partial pressure of a carbon carrier gas of the atmosphere, to denitrify and/or decarburise the surface layer (2).

2. Workpiece (1) according to claim 1, **characterised in that** the combined hold time of steps 2) and 3) is less than 20 hours.

3. Method according to claim 1 or 2, **characterised in that** the nitrogen content higher than or equal to 0.1% by weight is set in sintering step 1) by controlling the temperature and partial pressure of the nitrogen carrier gas of the atmosphere.

4. Method according to any one of the preceding claims, **characterised in that** powder sintering step 1) and steps 2) and 3) are carried out continuously during the same cycle.

5. Method according to any of claims 1 to 3, **characterised in that** steps 2) and 3) are carried out in separate cycles.

6. Method according to any one of the preceding claims, **characterised in that** the sintered alloy of step 1) is pre-formed by injection moulding, extrusion, pressing or additive manufacturing.

7. Method according to any one of the previous claims, **characterised in that** the sintered alloy of step 1) was obtained by spark plasma sintering SPS or by laser sintering.

8. Sintered austenitic stainless steel workpiece (1), produced according to any of the preceding claims, having a nitrogen content greater than or equal to 0.1% by weight and optionally a carbon content greater than or equal to 0.1% by weight, **characterised in that** the workpiece (1) has a surface layer (2) having a density higher than that of the core (3) of the workpiece (1) and **in that** the austenitic stainless steel has a nickel content less than or equal to 0.5% by weight.

9. Workpiece (1) according to claim 8, **characterised in that** the layer (2) has a minimum thickness of 20 µm, preferably of 30 µm, and more preferably of 50 µm.

10. Workpiece (1) according to claim 8 or 9, **characterised in that** the layer (2) has a thickness of less than 0.75 mm and preferably less than 0.5 mm.

11. Workpiece (1) according to any of claims 8 to 10, **characterised in that** layer (2) has a density comprised between 99 and 100%.

12. Workpiece (1) according to any of claims 8 to 11, **characterised in that** the austenitic stainless steel has a combined carbon and nitrogen content greater than or equal to 0.2% by weight.

13. Workpiece (1) according to any of claims 8 to 12, **characterised in that** the austenitic stainless steel has a mean grain size of less than 300 µm, preferably less than 100 µm, and more preferably less than 50 µm.

14. Workpiece (1) according to any of claims 8 to 13, **characterised in that** the workpiece is for a timepiece or piece of jewellery.

15. Watch or piece of jewellery including the workpiece (1) according to any of claims 8 to 14.
